# EUROPEAN PATENT APPLICATION

(11) **EP 4 841 757 A1**
(43) Date of publication of application: **18.11.2026**
(21) Application number: 26171964.5
(22) Date of filing: 13.04.2026
(51) Int. Cl.: H01M 10/658, H01M 10/627, H01M 10/647, H01M 50/209, H01M 50/242, H01M 50/249, H01M 50/289, H01M 50/291, H01M 50/293

(54) **POWER STORAGE DEVICE AND METHOD OF SECONDARY USAGE OF POWER STORAGE DEVICE**

(30) Priority: 12.05.2025 JP 2025079373
(71) Applicant: Toyota Jidosha Kabushiki Kaisha, Toyota-shi, Aichi-ken 471-8571 (JP)
(72) Inventor: AOTANI, Masashi, Toyota-shi, 471-8571 (JP); HARADA, Hironori, Toyota-shi, 471-8571 (JP)
(74) Representative: J A Kemp LLP

(57) **Abstract**

A power storage device (1) includes a plurality of power storage cells (10), a plurality of spacers (21, 22), and a case (30). The case (30) includes a pair of restraining walls (32) that restrain the plurality of power storage cells and the plurality of spacers. Each of the spacers (21, 22) includes at least one of an elastic plate (P1) and a heat insulating plate (P2). At least one of the elastic plate (P1) and the heat insulating plate (P2) is removable from between the pair of power storage cells (10).

## Description

### CROSS REFERENCE TO RELATED APPLICATIONS

This nonprovisional application is based on Japanese Patent Application No. 2025-079373 filed on May 12, 2025 with the Japan Patent Office, the entire contents of which are hereby incorporated by reference.

### BACKGROUND

### Field

The present disclosure relates to a power storage device and a method of secondary usage of the power storage device.

### Description of the Background Art

For example, Japanese Patent Laying-Open No. 2024-78146 describes that a battery module used in a vehicle is incorporated into a stationary power supply device and reused.

### SUMMARY

When the power storage device is used for stationary use, the power storage device may be deformed (for example, the thickness of the power storage cell may increase) due to long-term use because the use period of the power storage device is longer than that for in-vehicle use.

An object of the present disclosure is to provide a power storage device capable of suppressing deformation during long-term use and a method of secondary usage of the power storage device.

A power storage device according to the present disclosure includes:
a plurality of power storage cells arranged along one direction;
a plurality of spacers each disposed between a pair of power storage cells adjacent to each other among the plurality of power storage cells; and
a case housing the plurality of power storage cells and the plurality of spacers, wherein
the case includes a pair of restraining walls that restrain the plurality of power storage cells and the plurality of spacers, from both sides in the one direction,
each of the spacers includes at least one of an elastic plate and a heat insulating plate, and
at least one of the elastic plate and the heat insulating plate is removable from between the pair of power storage cells.

A method of secondary usage of a power storage device according to the present disclosure includes:
a preparation step of preparing the power storage device, the power storage device including:
   a plurality of power storage cells arranged along one direction;
   a plurality of spacers each disposed between a pair of power storage cells adjacent to each other among the plurality of power storage cells; and
   a case housing the plurality of power storage cells and the plurality of spacers; and
a removal step of removing at least one spacer among the plurality of spacers, prior to secondary usage of the power storage device, wherein
the case prepared in the preparation step includes a pair of restraining walls that restrain the plurality of power storage cells and the plurality of spacers, from both sides in the one direction, and each of the spacers includes at least one of an elastic plate and a heat insulating plate, and
in the removal step, at least one of the elastic plate and the heat insulating plate is removed from between the pair of power storage cells.

The foregoing and other objects, features, aspects and advantages of the present disclosure will become more apparent from the following detailed description of the present disclosure when taken in conjunction with the accompanying drawings.

### BRIEF DESCRIPTION OF THE DRAWINGS

Fig. 1 is a cross-sectional view schematically showing a power storage device according to an embodiment of the present disclosure.
Fig. 2 is a cross-sectional view schematically showing a modification of the power storage device.

### DESCRIPTION OF THE PREFERRED EMBODIMENTS

Embodiments of the present disclosure will be described with reference to the drawings. In the drawings referred to below, the same or corresponding members are denoted by the same reference numerals.

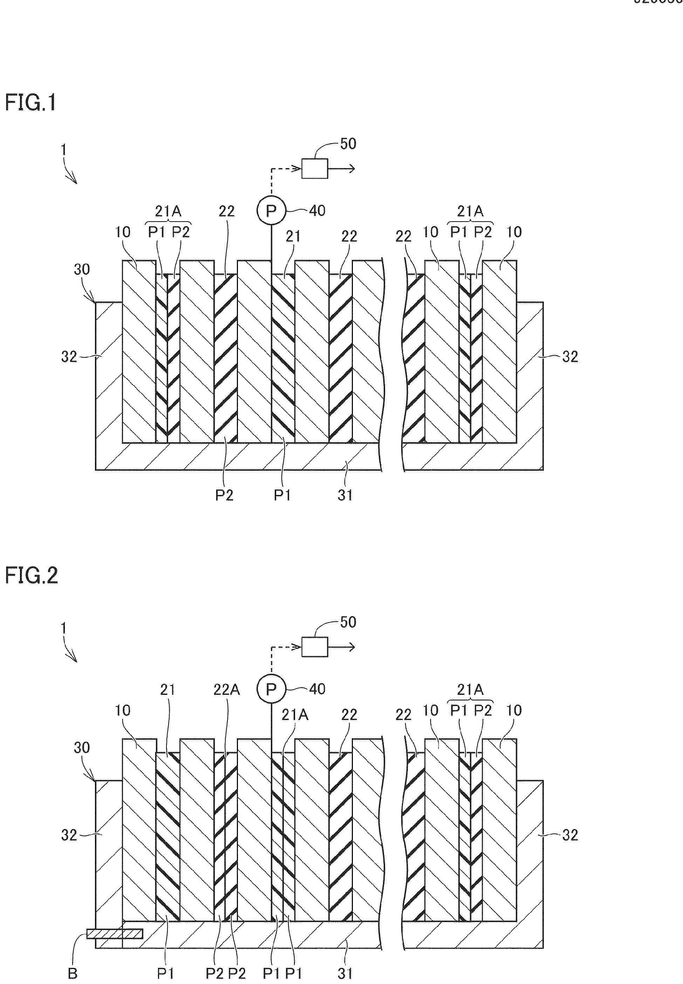

Fig. 1 is a cross-sectional view schematically showing a power storage device according to an embodiment of the present disclosure. The power storage device 1 is preferably mounted on, for example, a hybrid electric vehicle, a plug-in hybrid electric vehicle, or a battery electric vehicle.

As illustrated in Fig. 1, the power storage device 1 includes a plurality of power storage cells 10, a plurality of spacers 21 and 22, a case 30, a pressure sensor 40, and a signal output unit 50.

The plurality of power storage cells 10 are arranged along one direction (the left-right direction in Fig. 1). Each of the power storage cells 10 has a substantially rectangular parallelepiped cell case. Each power storage cell 10 may be configured by, for example, a lithium-ion secondary battery. An external terminal is provided on the top surface or the side surface of each power storage cell 10.

The spacers 21 and 22 are disposed between a pair of power storage cells 10 adjacent to each other. The spacers 21 and 22 may be formed to have the same thickness or different thicknesses. Each of the spacers 21 and 22 includes at least one first spacer 21 and at least one second spacer 22.

The first spacer 21 includes an elastic plate P1 made of an elastic material. The first spacer 21 may include a spacer group 21A. The spacer group 21A includes a heat insulating plate P2 made of a heat insulating material in addition to the elastic plate P1. Each of the elastic plate P1 and the heat insulating plate P2 is formed in a flat plate shape. Among the plurality of first spacers 21, the first spacers 21 other than the spacer group 21A are formed of only one elastic plate P1.

In the example shown in Fig. 1, the spacer group 21A is provided on the outermost side in one direction. However, the position of the spacer group 21A is not limited thereto.

The second spacer 22 is disposed at a position spaced from the first spacer 21. The second spacer 22 includes a heat insulating plate P2.

At least one of the elastic plate P1 and the heat insulating plate P2 is removable from between the pair of power storage cells 10. In the present embodiment, both the elastic plate P1 and the heat insulating plate P2 are removable from between the pair of power storage cells 10.

The case 30 houses the plurality of power storage cells 10 and the plurality of spacers 21 and 22. The case 30 has a bottom wall 31 and a pair of restraining walls 32.

The bottom wall 31 supports the plurality of power storage cells 10 and the plurality of spacers 21 and 22.

The pair of restraining walls 32 restrain the plurality of power storage cells 10 and the plurality of spacers 21 and 22 from both sides in one direction. Each of the restraining walls 32 stands from an end portion of the bottom wall 31 in one direction.

The pressure sensor 40 detects a pressure acting on each power storage cell 10. The pressure sensor 40 may be provided between the power storage cell 10 and the spacers 21 and 22.

The signal output unit 50 outputs a notification signal when the detection value of the pressure sensor 40 exceeds a preset value.

Next, a method of secondary usage of the power storage device 1 as a stationary power supply or the like will be described. The method includes a preparation step and a removal step.

In the preparation step, the power storage device 1 is prepared. Specifically, in the preparation step, the power storage device 1 is removed from the vehicle.

The removal step is performed prior to secondary usage of the power storage device 1. In the removal step, at least one spacer 21, 22 among the plurality of spacers 21, 22 is removed. For example, in the removal step, at least one of the elastic plate P1 and the heat insulating plate P2 is removed from between the pair of power storage cells 10.

As described above, in the power storage device 1 according to the present embodiment, when the restraining force acting on each power storage cell 10 from the pair of restraining walls 32 increases due to the expansion of the power storage cell 10, the restraining force acting on each power storage cell 10 is reduced by removing at least one of the elastic plate P1 and the heat insulating plate P2. Therefore, deformation of the power storage device 1 during long-term use is suppressed. In addition, damage to each power storage cell 10 due to aging or the like is also suppressed.

Further, in the method of secondary usage of the power storage device 1, since at least one of the elastic plate P1 and the heat insulating plate P2 is removed from between the pair of power storage cells 10 in the removal step before the secondary usage of the power storage device 1, the restraining force acting on each power storage cell 10 during the secondary usage is reduced. Therefore, even when the power storage cell 10 expands due to aging or the like, deformation of the power storage device 1 during secondary usage is suppressed. In addition, damage to each power storage cell 10 is also suppressed.

Although the spacer group 21A includes the elastic plate P1 and the heat insulating plate P2 in the above embodiment, the spacer group 21A may include a plurality of elastic plates P1 as illustrated in Fig. 2. The second spacer 22 may include a spacer group 22A. The spacer group 22A includes a plurality of heat insulating plates P2.

At least one of the pair of restraining walls 32 may be configured to be movable in one direction away from the bottom wall 31. In the example shown in Fig. 2, one of the restraining walls 32 is movable relative to the bottom wall 31 in one direction by the fastening member B.

It will be understood by those skilled in the art that the exemplary embodiments described above are specific examples of the following aspects.

### [Aspect 1]

A power storage device including:
a plurality of power storage cells arranged along one direction;
a plurality of spacers each disposed between a pair of power storage cells adjacent to each other among the plurality of power storage cells; and
a case housing the plurality of power storage cells and the plurality of spacers, wherein
the case includes a pair of restraining walls that restrain the plurality of power storage cells and the plurality of spacers, from both sides in the one direction,
each of the spacers includes at least one of an elastic plate and a heat insulating plate, and
at least one of the elastic plate and the heat insulating plate is removable from between the pair of power storage cells.

In this power storage device, when the restraining force acting on each power storage cell from the pair of restraining walls increases due to expansion of the power storage cell, the restraining force acting on each power storage cell is reduced by removing at least one of the heat insulating plate and the elastic plate. Therefore, deformation of the power storage device during long-term use is suppressed.

### [Aspect 2]

The power storage device according to Aspect 1, wherein
the plurality of spacers include:
a first spacer including the elastic plate, the elastic plate being at least one elastic plate, and
a second spacer disposed at a position spaced from the first spacer and including the heat insulating plate, the heat insulating plate being at least one heat insulating plate.

### [Aspect 3]

The power storage device according to Aspect 2, wherein the first spacer further includes the at least one heat insulating plate.

### [Aspect 4]

The power storage device according to Aspect 2 or 3, wherein the first spacer includes a spacer group including a plurality of the elastic plates.

### [Aspect 5]

The power storage device according to any one of Aspects 1 to 4, further including:
a pressure sensor capable of detecting a pressure acting on each of the power storage cells; and
a signal output unit that outputs a notification signal when a detection value of the pressure sensor exceeds a preset value.

In this aspect, breakage of each power storage cell due to aging deterioration or the like is suppressed.

### [Aspect 6]

A method of secondary usage of a power storage device, the method including:
a preparation step of preparing the power storage device, the power storage device comprising:
   a plurality of power storage cells arranged along one direction;
   a plurality of spacers each disposed between a pair of power storage cells adjacent to each other among the plurality of power storage cells; and
   a case housing the plurality of power storage cells and the plurality of spacers; and
a removal step of removing at least one spacer among the plurality of spacers, prior to secondary usage of the power storage device, wherein
the case prepared in the preparation step includes a pair of restraining walls that restrain the plurality of power storage cells and the plurality of spacers, from both sides in the one direction, and each of the spacers includes at least one of an elastic plate and a heat insulating plate, and
in the removal step, at least one of the elastic plate and the heat insulating plate is removed from between the pair of power storage cells.

In the method of secondary usage of the power storage device, since at least one of the elastic plate and the heat insulating plate is removed from between the pair of power storage cells in the removal step before the secondary usage of the power storage device, the restraining force acting on each power storage cell during the secondary usage is reduced. Therefore, even when the power storage cell expands due to aging or the like, deformation of the power storage device during secondary usage is suppressed.

Although the present disclosure has been described and illustrated in detail, it is clearly understood that the same is by way of illustration and example only and is not to be taken by way of limitation, the scope of the present disclosure being interpreted by the terms of the appended claims.

## Claims

1. A power storage device (1), comprising:
a plurality of power storage cells (10) arranged along one direction;
a plurality of spacers (21, 22) each disposed between a pair of power storage cells (10) adjacent to each other among the plurality of power storage cells (10); and
a case (30) housing the plurality of power storage cells (10) and the plurality of spacers, wherein
the case (30) includes a pair of restraining walls (32) that restrain the plurality of power storage cells (10) and the plurality of spacers, from both sides in the one direction,
each of the spacers (21, 22) includes at least one of an elastic plate (P1) and a heat insulating plate (P2), and
at least one of the elastic plate (P1) and the heat insulating plate (P2) is removable from between the pair of power storage cells (10).

2. The power storage device (1) according to claim 1, wherein
the plurality of spacers include:
a first spacer (21) including the elastic plate (P1), the elastic plate (P1) being at least one elastic plate, and
a second spacer (22) disposed at a position spaced from the first spacer (21) and including the heat insulating plate (P2), the heat insulating plate being at least one heat insulating plate.

3. The power storage device (1) according to claim 2 or 3, wherein the first spacer (21) includes a spacer group (21A, 22A) including a plurality of the elastic plates (P1).

4. The power storage device (1) according to any one of claims 1 to 3, further comprising:
a pressure sensor (40) capable of detecting a pressure acting on each of the power storage cells (10); and
a signal output unit (50) that outputs a notification signal when a detection value of the pressure sensor (40) exceeds a preset value.

5. A method of secondary usage of a power storage device (1), the method comprising:
a preparation step of preparing the power storage device (1), the power storage device (1) comprising:
a plurality of power storage cells (10) arranged along one direction;
a plurality of spacers (21, 22) each disposed between a pair of power storage cells (10) adjacent to each other among the plurality of power storage cells (10); and
a case (30) housing the plurality of power storage cells (10) and the plurality of spacers; and
a removal step of removing at least one spacer among the plurality of spacers, prior to secondary usage of the power storage device (1), wherein
the case (30) prepared in the preparation step includes a pair of restraining walls (32) that restrain the plurality of power storage cells (10) and the plurality of spacers, from both sides in the one direction, and each of the spacers (21, 22) includes at least one of an elastic plate (P1) and a heat insulating plate (P2), and
in the removal step, at least one of the elastic plate (P1) and the heat insulating plate (P2) is removed from between the pair of power storage cells (10).
